# EUROPÄISCHE PATENTSCHRIFT

(11) **EP 3 401 195 B1**
(45) Veröffentlichungstag und Bekanntmachung des Hinweises auf die Patenterteilung: **21.10.2020**
(21) Anmeldenummer: 18171047.6
(22) Anmeldetag: 07.05.2018
(51) Int. Cl.: B62D 49/06, G06F 3/0482, G06F 3/0488, G06F 3/0484

(54) **LANDWIRTSCHAFTLICHE ARBEITSMASCHINE**
AGRICULTURAL MACHINE
MACHINE AGRICOLE

(30) Priorität: 10.05.2017 DE 102017110109
(43) Veröffentlichungstag der Anmeldung: 14.11.2018
(73) Patentinhaber: CLAAS Tractor S.A.S., 78141 Vélizy-Villacoublay Cedex (FR)
(72) Erfinder: Wieckhorst, Jan Carsten, 33098 Paderborn (DE); Ehlert, Christian, 33719 Bielefeld (DE); Meyer, Lennart, 52062 Aachen (DE); Heydekorn, Jens, 33428 Harsewinkel (DE); Noyer, Pierre, 81739 München (DE)
(74) Vertreter: CLAAS Gruppe

(56) Entgegenhaltungen:
- EP-A1- 3 120 678
- CN-A- 106 572 630
- DE-A1-102005 031 134
- DE-A1-102012 107 551
- DE-A1-102014 102 489

## Beschreibung

Die Erfindung betrifft eine landwirtschaftliche Arbeitsmaschine nach dem Oberbegriff des Anspruchs 1.

Aus dem Stand der Technik (EP 3 046 015 A1) ist eine landwirtschaftliche Arbeitsmaschine in Form eines Traktors bekannt, die ein Fahrerassistenzsystem mit einer Ein-/Ausgabeeinheit aufweist. Die Ein-/Ausgabeeinheit weist eine Vielzahl von Hardware-Tasten, -Schaltern, -Schiebereglern, -Drehreglern o. dgl. auf sowie einen Touchscreen. Der Touchscreen dient dazu, in verschiedenen Zustandsanzeigebereichen Zustände ausgewählter Funktionsmodule, beispielsweise von einem mit der landwirtschaftlichen Arbeitsmaschine verbundenen Anbaugerät, anzuzeigen. Der Touchscreen ist dabei in verschiedene Anzeigebereiche eingeteilt, von denen einige vertikal übereinander angeordnet sind und zur Anzeige der Zustandsinformationen dienen und von denen andere horizontal nebeneinander angeordnet sind und virtuelle Auswahltasten bilden, über die die anzuzeigenden Zustandsinformationen ausgewählt werden können. Die Dokumente DE 10 2012 107551 A1, EP 3 120 678 A1, DE 10 2014 102489 A1, DE 10 2005 031134 A1 und CN 106 572 630 A beschreiben bekannte landwirtschaftliche Arbeitsmaschinen mit Fahrerassistenzsystem, die eine Ein-/ Ausgabeeinheit zur Eingabe von Parametern aufweisen.

Eine Vornahme von Einstellungen von Funktionsmodulen oder Arbeitsaggregaten erfolgt dabei nicht über den Touchscreen, sondern über die Vielzahl von Tasten, Schaltern, Schiebereglern, Drehreglern o. dgl. Um eine landwirtschaftliche Arbeitsmaschine und/oder das jeweilige Arbeitsaggregat an einen konkreten landwirtschaftlichen Arbeitsauftrag anpassen zu können, muss die Bedienperson eine Vielzahl von Einstellungen über diese Bedienerelemente vornehmen, was relativ kompliziert und zeitaufwändig ist. Dabei besteht auch das Risiko, dass bestimmte Einstellungen nicht oder zumindest nicht in ausreichendem Maße vorgenommen werden, da die Bedienperson aufgrund der Vielzahl von Einstellmöglichkeiten einzelne davon möglicherweise versehentlich oder aufgrund der Komplexität bewusst nicht berücksichtigt. Die Folge ist, dass der landwirtschaftliche Arbeitsauftrag anschließend nicht optimal durchgeführt wird.

Der Erfindung liegt das Problem zugrunde, eine landwirtschaftliche Arbeitsmaschine bereitzustellen, die eine vereinfachte Einstellung mindestens eines Parameters der landwirtschaftlichen Arbeitsmaschine und/oder eines Arbeitsaggregats durch eine Bedienperson gewährleistet.

Das obige Problem wird bei einer landwirtschaftlichen Arbeitsmaschine gemäß dem Oberbegriff von Anspruch 1 durch die Merkmale des kennzeichnenden Teils von Anspruch 1 gelöst.

Bei der vorschlagsgemäßen landwirtschaftlichen Arbeitsmaschine handelt es sich insbesondere um einen Traktor. Grundsätzlich ist die vorschlagsgemäße Lösung auch auf jedwede andere landwirtschaftliche Arbeitsmaschine, beispielsweise einen Mähdrescher oder Feldhäcksler, anwendbar. Die landwirtschaftliche Arbeitsmaschine weist ein Fahrerassistenzsystem auf, womit hier und vorzugsweise ein System gemeint ist, das den Fahrer bzw. die Bedienperson der landwirtschaftlichen Arbeitsmaschine bei der Bedienung derselben während der Durchführung des landwirtschaftlichen Arbeitsauftrags unterstützt. Die Unterstützung kann sich dabei auf das Fahren und/oder Lenken der landwirtschaftlichen Arbeitsmaschine beziehen, aber auch auf die Steuerung und Regelung mindestens eines der Funktionsmodule. Unter dem Begriff "Funktionsmodul" werden zum einen interne bzw. fest mit der landwirtschaftlichen Arbeitsmaschine verbundene Komponenten zum Betrieb der landwirtschaftlichen Arbeitsmaschine, wie beispielsweise eine Ballasteinrichtung, Reifen bzw. Reifenpaare etc., sowie interne bzw. fest mit der landwirtschaftlichen Arbeitsmaschine verbundene Arbeitsaggregate zur Durchführung oder Unterstützung landwirtschaftlicher Arbeit verstanden, wie beispielsweise Antriebsmotor (Fahrantrieb), Fahrgetriebe etc. Zum anderen umfasst der Begriff "Funktionsmodul" auch externe bzw. anbaubare Arbeitsaggregate zur Durchführung oder Unterstützung landwirtschaftlicher Arbeit (Anbaugeräte), wie beispielsweise einen Pflug, eine Ballenpresse, eine Frontladeschaufel etc.

Wesentlich bei der vorschlagsgemäßen landwirtschaftlichen Arbeitsmaschine ist zum einen, dass mit der Ein-/Ausgabeeinheit eine interaktive Einstellung mindestens eines Parameters der landwirtschaftlichen Arbeitsmaschine und/oder mindestens eines Arbeitsaggregats derselben symbol- und/oder bildbasiert und geführt vorgenommen werden kann. Die Bedienperson muss also nicht wie beim Stand der Technik eine unübersichtliche Vielzahl von Hardware-Tasten, -Schaltern, -Schiebereglern, -Drehreglern o.dgl., die sich oftmals auch sehr ähneln, bedienen, sondern die Bedienperson erhält durch von der Ein-/Ausgabeeinheit vorgegebene und vorausgewählte virtuelle Bedienelemente und Symbole und/oder Bilder die Möglichkeit einer intuitiven Bedienung, die gleichzeitig auch vom System geführt wird, das heißt das System führt die Bedienperson durch die jeweiligen Bedienschritte zur Einstellung des jeweiligen Parameters.

Wesentlich ist zum anderen auch, dass der mindestens eine einstellbare Parameter und/oder dessen Wert oder Wertebereich jeweils auf einen von der Bedienperson ausgewählten landwirtschaftlichen Arbeitsauftrag hin und/oder auf ein von der Bedienperson ausgewähltes und/oder angebautes bzw. eingesetztes Arbeitsaggregat hin vom Fahrerassistenzsystem vorausgewählt wird.

Die Ein-/Ausgabeeinheit gibt der Bedienperson also zunächst die Möglichkeit, einen landwirtschaftlichen Arbeitsauftrag auszuwählen, woraufhin das System dann der Bedienperson automatisch diejenigen Parameter und/oder Werte oder Wertebereiche des jeweiligen Parameters vorgibt, die dem landwirtschaftlichen Arbeitsauftrag entsprechend eingestellt werden können. Alternativ oder zusätzlich besteht auch die Möglichkeit, ein Arbeitsaggregat, welches bei einem landwirtschaftlichen Arbeitsauftrag eingesetzt werden soll, der Ein-/Ausgabeeinheit zunächst vorzugeben, beispielsweise indem dieses ebenfalls über die Ein-/Ausgabeeinheit von der Bedienperson ausgewählt wird oder indem das Arbeitsaggregat an die landwirtschaftliche Arbeitsmaschine angebaut und dadurch erkannt wird. Auch eine solche Vorgabe des Arbeitsaggregats bewirkt, dass die Ein-/Ausgabeeinheit der Bedienperson nur die relevanten einstellbaren Parameter und/oder zugehörigen Werte oder Wertebereiche anzeigt.

Die vorschlagsgemäße landwirtschaftliche Arbeitsmaschine hat durch das spezielle Fahrerassistenzsystem bzw. die spezielle Ein-/Ausgabeeinheit den Vorteil, dass die Einstellung bzw. Anpassung der landwirtschaftlichen Arbeitsmaschine durch eine arbeitsauftragsspezifische und/oder arbeitsaggregatsspezifische Vorauswahl von einstellbaren Parametern und/oder Werten bzw. Wertebereichen für die Bedienperson gegenüber dem Stand der Technik vereinfacht wird.

Die interaktive Einstellung wird bei der Ausgestaltung gemäß Anspruch 2 besonders dadurch vereinfacht, dass die Ein-/Ausgabeeinheit für die vorzunehmenden Einstellungen einen Touchscreen aufweist. Ein Touchscreen ermöglicht auf besonders einfache Weise eine symbol- und/oder bildbasierte und geführte Vornahme von interaktiven Einstellungen, speziell des mindestens einen Parameters der landwirtschaftlichen Arbeitsmaschine und/oder des Arbeitsaggregats. Der Touchscreen ist dabei insbesondere im Innern der landwirtschaftlichen Arbeitsmaschine, vorzugsweise in der Kabine derselben, angeordnet. Es ist aber zusätzlich oder alternativ auch denkbar, dass die Ein-/Ausgabeeinheit auch Ein-/Ausgabemittel außen an der landwirtschaftlichen Arbeitsmaschine, beispielsweise in der Nähe bzw. in Sichtweite des jeweiligen Arbeitsaggregats bzw. Anbaugeräts, aufweist. Es ist ferner denkbar, dass die arbeitsauftragsspezifische und/oder arbeitsaggregatspezifische Einstellung der landwirtschaftlichen Arbeitsmaschine an einem (externen) Rechner bzw. PC vorgenommen wird und über z.B. Telemetrie an die landwirtschaftliche Arbeitsmaschine und/oder die Ein-/Ausgabeeinheit bzw. das Fahrerassistenzsystem übertragen wird.

Die Ein-/Ausgabeeinheit, insbesondere der Touchscreen, kann einen oder mehrere Anzeigeabschnitte aufweisen, die unterschiedliche Informationen und/oder virtuelle Bedienelemente anzeigen (Anspruch 3). Insbesondere kann als ein virtuelles Bedienelement eine Darstellung der landwirtschaftlichen Arbeitsmaschine selbst, beispielsweise als Silhouette, insbesondere Traktorsilhouette, vorgesehen sein. Insbesondere können auch interne und/oder externe Arbeitsaggregate und/oder weitere Funktionsmodule der landwirtschaftlichen Arbeitsmaschine symbol- und/oder bildbasiert angezeigt werden. Gerade durch eine solche optische Darstellung wird die intuitive Einstellung vereinfacht, wodurch eine leicht verständliche Auswahl einzustellender Funktionen bereitgestellt wird. Nachdem dem Fahrerassistenzsystem ein Arbeitsauftrag und/oder Arbeitsaggregat vorgegeben worden ist, kann die Bedienperson durch ein übersichtliches Menü durch die noch einzustellenden arbeitsauftragsspezifische bzw. arbeitsaggregatspezifischen Parameter geführt werden.

Anspruch 4 definiert verschiedene Möglichkeiten dessen, was in einem Anzeigeabschnitt der Ein-/Ausgabeeinheit angezeigt werden kann, wobei es sich um ein und denselben Anzeigeabschnitt oder um unterschiedliche Anzeigeabschnitte handeln kann.

Wie gesagt, kann die Arbeitsmaschine auch verschiedene weitere Funktionsmodule neben dem Arbeitsaggregat, insbesondere neben dem Anbaugerät, aufweisen, wobei als ein weiteres Funktionsmodul gemäß Anspruch 5 eine vordere Ballasteinrichtung, eine hintere Ballasteinrichtung, ein vorderes Reifenpaar, ein hinteres Reifenpaar, ein Antriebsmotor, ein Fahrgetriebe und/oder ein GPS-System vorgesehen sein kann. Das jeweilige weitere Funktionsmodul kann dann ebenfalls in einem Anzeigeabschnitt optisch bzw. symbol- und/oder bildbasiert angezeigt werden.

Die Bedienperson hat durch die vorschlagsgemäß vorgesehene Ein-/Ausgabeeinheit die Möglichkeit, zunächst einen übergeordneten landwirtschaftlichen Arbeitsauftrag, der also einen Arbeitstyp definiert, und ggfs. später einen entsprechenden untergeordneten landwirtschaftlichen Arbeitsauftrag, der eine untergeordnete Bearbeitungsart definiert, auszuwählen. Die Ein-/Ausgabeeinheit kann den jeweils auswählbaren und/oder von der Bedienperson ausgewählten landwirtschaftlichen Arbeitsauftrag anzeigen. Einzelne übergeordnete landwirtschaftliche Arbeitsaufträge sind dabei in Anspruch 6 definiert. Zugeordnete untergeordnete Arbeitsaufträge sind in den Ansprüchen 7 bis 9 definiert. Der oder die auswählbaren untergeordneten Arbeitsaufträge können der Bedienperson grundsätzlich auch als erste mögliche Einstellung nach dem Start der Einstellroutine vorgegeben werden, so dass die Bedienperson nicht vorher einen übergeordneten Arbeitsauftrag auswählen muss, wobei es aber genauso möglich ist, zunächst den übergeordneten und dann den untergeordneten Arbeitsauftrag auszuwählen (Anspruch 10).

Anspruch 11 definiert ferner, dass der Bedienperson auch mindestens ein Arbeitsaggregat angezeigt wird, das einem landwirtschaftlichen Arbeitsauftrag zugeordnet ist aus der Gruppe umfassend mindestens einen landwirtschaftlichen Arbeitsauftrag, der in den Ansprüchen 6 bis 9 definiert ist. Für den übergeordneten landwirtschaftlichen Arbeitsauftrag "Ackerbau" und/oder den korrespondierenden untergeordneten Arbeitsauftrag "Grund-/Bodenbearbeitung" wird als zugeordnetes Arbeitsaggregat beispielsweise ein Pflug und/oder Grubber angezeigt. Für den übergeordneten landwirtschaftlichen Arbeitsauftrag "Futterernte" und/oder den entsprechenden untergeordneten Arbeitsauftrag "Grünlandbewirtschaftung" und/oder "Ernten" wird beispielsweise als zugeordnetes Arbeitsaggregat ein Heuwender oder eine Ballenpresse angezeigt. Dies sollen nur einige Beispiele für einem landwirtschaftlichen Arbeitsauftrag zugeordnete Arbeitsaggregate sein.

Bei der Ausgestaltung gemäß Anspruch 12 wird das eingesetzte Arbeitsaggregat, welches die automatische Vorauswahl von einzustellenden Parametern und/oder Werten oder Wertebereichen ermöglicht, automatisch beim Herstellen einer mechanischen Verbindung und/oder einer drahtgebundenen oder drahtlosen Datenverbindung zwischen dem jeweiligen Arbeitsaggregat und der landwirtschaftlichen Arbeitsmaschine erkannt. In diesem Fall wird also das Arbeitsaggregat, bei dem es sich dann um ein Anbaugerät handelt, von der Ein-/Ausgabeeinheit automatisch beim Anschluss an die landwirtschaftliche Arbeitsmaschine erkannt, woraufhin dann die Ein-/Ausgabeeinheit, vorzugsweise auch automatisch, auf den landwirtschaftlichen Arbeitsauftrag schließen kann. Zusätzlich oder alternativ kann es aber auch der Bedienperson überlassen sein, nach dem Anschluss des Arbeitsaggregats den landwirtschaftlichen Arbeitsauftrag auszuwählen oder zu bestätigen.

Anspruch 13 definiert verschiedene Parameter, speziell Betriebsparameter der landwirtschaftlichen Arbeitsmaschine und/oder Umgebungsparameter des Geländes, die von der Ein-/Ausgabeeinheit anzeigbar und/oder damit einstellbar und/oder auswählbar sind. Diese Parameter können zumindest teilweise auch von der landwirtschaftlichen Arbeitsmaschine erfasst werden. Der auf diese Weise der Ein-/Ausgabeeinheit zugeführte Parameter bzw. Wert oder Wertebereich kann der arbeitsaggregatsspezifischen und/oder arbeitsauftragsspezifischen Einstellung des Fahrerassistenzsystems ebenfalls zugrunde gelegt werden und/oder lediglich als Information für die Bedienperson dienen. Beispielhaft sei hier als Betriebsparameter das Gewicht einer der Ballasteinrichtungen oder der Reifentyp oder Luftdruck eines der Reifenpaare der landwirtschaftlichen Arbeitsmaschine genannt. Beispiele für einen Umgebungsparameter sind Bodenart, -zustand, -feuchte etc. Weitere Beispiele werden im Weiteren noch beschrieben.

Anspruch 14 definiert, dass das Fahrerassistenzsystem zwischen einem Vorbereitungsmodus und mindestens einem Arbeitsmodus umschaltbar ist. Der Vorbereitungsmodus erlaubt es, das interaktive Einstellen mittels der Ein-/Ausgabeeinheit vorzunehmen. Zusätzlich oder alternativ erlaubt es der Arbeitsmodus, den mindestens einen Betriebsparameter und/oder Umgebungsparameter während des Ausführens des landwirtschaftlichen Arbeitsauftrags zu erfassen und/oder anzuzeigen. Es ist auch denkbar, dass neben dem Vorbereitungsmodus mindestens zwei Arbeitsmodi, darunter ein Arbeitsmodus für Feldarbeit und ein Arbeitsmodus für Straßenfahrt, vorgesehen sind. Je nach gewähltem Modus, werden der Bedienperson nur die zugeordneten Informationen und Auswahlmöglichkeiten durch die Ein-/Ausgabeeinheit angezeigt.

Bei der Ausgestaltung gemäß Anspruch 15 ist vorgesehen, dass einzelne oder mehrere der vorgenannten Parameter und/oder einzelne oder mehrere arbeitsauftragsspezifische und/oder arbeitsaggregatspezifische Profile, die jeweils einzelne oder mehrere der Parameter umfassen, gespeichert werden können. Bei einem nachfolgenden Einstellvorgang können dann zusätzlich oder alternativ auch solchermaßen gespeicherte Daten abgerufen werden. Auch ist es denkbar, bei einem nachfolgenden Einstellvorgang einzelne der Daten auszublenden. Auf diese Weise ist es zum Beispiel möglich, bestimmte Werte oder Wertebereiche als "best practice" für einen nachfolgenden Einstellvorgang bereitzustellen. Werte oder Wertebereiche, die zu einem schlechten Arbeitsergebnis geführt haben, können entsprechend ausgeblendet werden. Eine Hinterlegung von arbeitsauftragsspezifischen und/oder arbeitsaggregatspezifischen Profilen ermöglicht ein besonders schnelles Einstellen der landwirtschaftlichen Arbeitsmaschine und/oder des Arbeitsaggregats.

In Anspruch 16 ist schließlich definiert, dass in Abhängigkeit von dem jeweils gewählten Modus (Vorbereitungsmodus, jeweiliger Arbeitsmodus) und/oder von dem jeweiligen Arbeitsauftrag und/oder Arbeitsaggregat ausschließlich spezifisch zugeordnete Anzeigeabschnitte und/oder Informationen angezeigt werden. Der Bedienperson werden also von der Ein-/Ausgabeeinheit abhängig von Modus, Arbeitsauftrag und/oder Arbeitsaggregat spezifische Untermenüs angezeigt, um den Einstellprozess zu vereinfachen.

Im Folgenden wird die Erfindung anhand einer lediglich Ausführungsbeispiele darstellenden Zeichnung näher erläutert. In der Zeichnung zeigt
- Fig. 1: eine schematische Ansicht einer vorschlagsgemäßen landwirtschaftlichen Arbeitsmaschine mit einem programmierbaren Fahrerassistenzsystem und
- Fig. 2 - 6: eine schematische Darstellung des grundsätzlichen Ablaufs einer interaktiven Einstellung von Parametern der landwirtschaftlichen Arbeitsmaschine aus Fig. 1.

Die vorschlagsgemäße landwirtschaftliche Arbeitsmaschine 1 erlaubt eine interaktive Einstellung eines oder mehrerer Parameter der landwirtschaftlichen Arbeitsmaschine 1 und/oder eines oder mehrerer Arbeitsaggregate 2 zur Durchführung oder Unterstützung eines landwirtschaftlichen Arbeitsauftrags. Dazu weist die landwirtschaftliche Arbeitsmaschine 1 ein Fahrerassistenzsystem 3 mit einer Ein-/Ausgabeeinheit 4 auf, die im Weiteren noch näher beschrieben wird. Die Ein-/Ausgabeeinheit 4 erlaubt die Einstellung des oder der Parameter symbol- und/oder bildbasiert und geführt, wobei der jeweils einstellbare Parameter und/oder dessen Wert oder Wertebereich jeweils auf einen von der Bedienperson ausgewählten landwirtschaftlichen Arbeitsauftrag hin und/oder auf ein von der Bedienperson eingesetztes Arbeitsaggregat 2 hin vom Fahrerassistenzsystem 3 vorausgewählt wird.

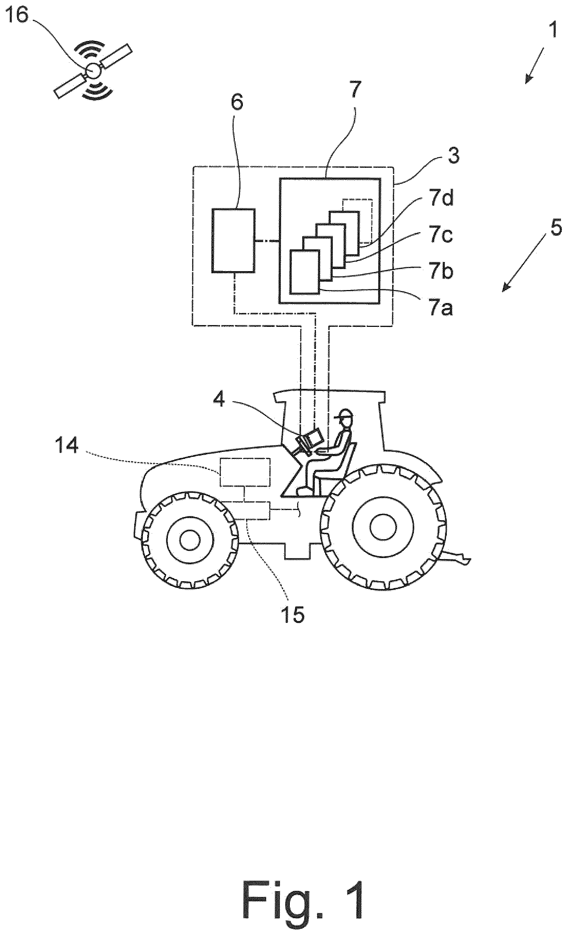

In Fig. 1 ist dargestellt, wie eine landwirtschaftliche Arbeitsmaschine 1 für die Durchführung eines konkreten landwirtschaftlichen Arbeitsauftrags programmiertechnisch vorbereitet wird. Bei dem durchzuführenden landwirtschaftlichen Arbeitsauftrag handelt es sich hier beispielhaft um eine Bodenbearbeitung mittels eines Grubbers. Der Grubber, der das Arbeitsaggregat 2 zur Durchführung des landwirtschaftlichen Arbeitsauftrags bildet, ist in Fig. 1 noch nicht mit der landwirtschaftlichen Arbeitsmaschine 1 verbunden, da hier und vorzugsweise die interaktive Einstellung der Parameter der landwirtschaftlichen Arbeitsmaschine 1 bzw. des Arbeitsaggregats 2 und dadurch die Programmierung des Fahrerassistenzsystems 3 vorgenommen wird, bevor das jeweilige Arbeitsaggregat 2 angebaut wird. Grundsätzlich ist aber auch der Fall denkbar, dass das jeweilige Arbeitsaggregat 2 zuerst angebaut wird und anschließend erst die interaktive Einstellung bzw. Programmierung durchgeführt wird.

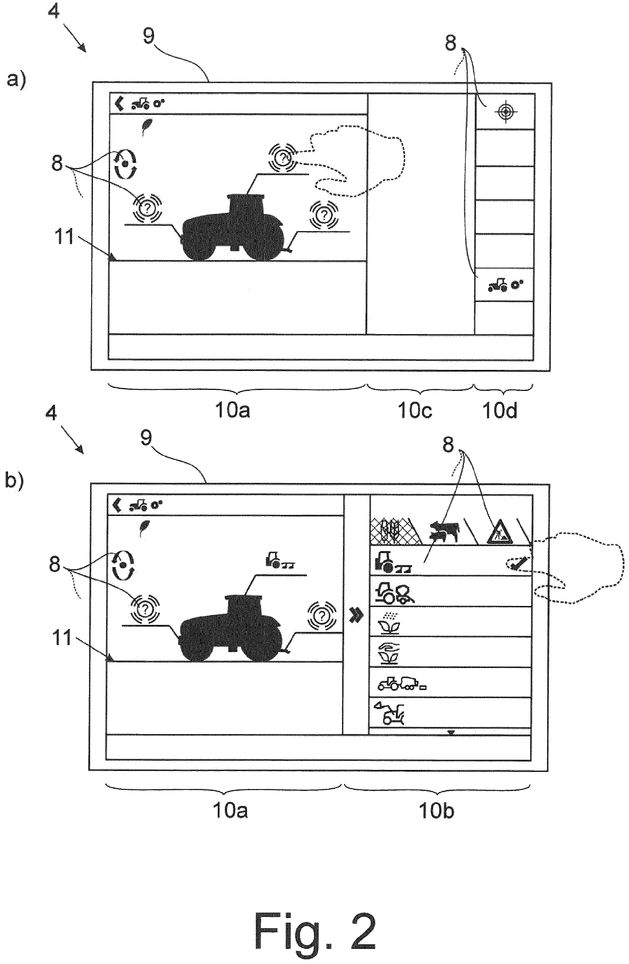

Bei der vorschlagsgemäßen landwirtschaftlichen Arbeitsmaschine 1 ist zum einen wesentlich, dass die interaktive Einstellung der Parameter von landwirtschaftlicher Arbeitsmaschine 1 und/oder jeweiligem Arbeitsaggregat 2 symbol- und/oder bildbasiert und geführt vorgenommen werden kann, was im Weiteren anhand der Fig. 2 bis 6 an einem exemplarischen Ausführungsbeispiel beschrieben wird. Symbolbasiert bzw. bildbasiert bedeutet, dass einzelne oder mehrere, vorzugsweise alle Einstellmöglichkeiten der Bedienperson optisch anhand eines eindeutigen Symbols bzw. Bildes dargestellt werden und die Bedienperson zur Auswahl dieser Einstellmöglichkeiten nicht zwingend Text lesen und/oder eingeben muss. Geführt bedeutet, dass das Fahrerassistenzsystem 3 bzw. die Ein-/Ausgabeeinheit 4 der Bedienperson zunächst verschiedene Auswahlmöglichkeiten vorgibt und dass, nachdem die Bedienperson eine dieser Möglichkeiten ausgewählt hat, diese in ein zugeordnetes weiteres Auswahlfeld oder Untermenü führt, in welchem nur Parameter eingestellt werden können, die einen Bezug zu der vorangegangenen Auswahl haben. Für die vorangegangene Auswahl irrelevante Parameter, die aber möglicherweise für andere Fälle relevant sind, werden hier vorzugsweise ausgeblendet oder die Bedienperson wird auf andere Weise daran gehindert, irrelevante Parameter zu verändern. Die Bedienperson wird, und dies ist ein weiterer wesentlicher Aspekt der vorschlagsgemäßen Lösung, in Abhängigkeit von einem ausgewählten landwirtschaftlichen Arbeitsauftrag und/oder einem ausgewählten einzusetzenden Arbeitsaggregat 2 durch die interaktive Einstellroutine geführt. Das Fahrerassistenzsystem 3 bzw. die Ein-/Ausgabeeinheit 4 trifft also automatisch, nachdem die Bedienperson hier und vorzugsweise einen landwirtschaftlichen Arbeitsauftrag ausgewählt hat, eine Vorauswahl von in diesem Fall einstellbaren Parametern und/oder zugeordneten Werten oder Wertebereichen. Der Bedienperson werden also nur arbeitsauftragsspezifische Parameter und/oder Werte oder Wertebereiche zum Einstellen angezeigt. Parameter, die andere landwirtschaftliche Aufträge betreffen, werden nicht angezeigt. Vorzugsweise werden auch Parameter, die zwar den konkreten ausgewählten Arbeitsauftrag betreffen, die aber systemseitig vorgegeben werden und nicht änderbar sein sollen, der Bedienperson ebenfalls nicht angezeigt. Es sei darauf hingewiesen, dass es in einem alternativen Ausführungsbeispiel auch denkbar ist, dass die Bedienperson als Vorauswahl nicht einen landwirtschaftlichen Arbeitsauftrag vorgibt, sondern direkt ein konkretes einzusetzendes Arbeitsaggregat 2 und das System anschließend entsprechend nur arbeitsaggregatspezifische Parameter und/oder Werte oder Wertebereiche zur Einstellung vorgibt.

Bei der Darstellung in Fig. 1 erkennt man, dass Bestandteil des Fahrerassistenzsystems 3 (gestrichelt dargestellt) die Ein-/Ausgabeeinheit 4 ist sowie der Mikroprozessor 6 und ein Speichermedium 7. Bei der Ein-/Ausgabeeinheit 4 handelt es sich um eine Einheit aus Komponenten, die geeignet sind zur Vornahme von einen landwirtschaftlichen Arbeitsauftrag betreffenden Einstellungen durch die Bedienperson und zur Anzeige von die Einstellungen ermöglichenden virtuellen Bedienelementen 8 und zur Anzeige von den vorzunehmenden und/oder vorgenommenen Einstellungen entsprechenden Informationen. Hier und vorzugsweise weist die Ein-/Ausgabeeinheit 4 einen Touchscreen 9 auf, mit dem die interaktive Einstellung des jeweiligen Parameters durchgeführt werden kann. Außerdem können als Teil der Ein-/Ausgabeeinheit 4 außen an der landwirtschaftlichen Arbeitsmaschine 1 Ein-/Ausgabemittel vorgesehen sein (nicht dargestellt).

Auf dem Speichermedium 7 sind, was in Fig. 1 schematisch dargestellt ist, mehrere arbeitsauftragsspezifische und/oder arbeitsaggregatspezifische Speicherpakete 7a, 7b, 7c, 7d abgelegt, also Speicherpakete 7a, 7b, 7c, 7d, die jeweils einem konkreten Arbeitsauftrag und/oder einem konkreten Arbeitsaggregat 2 zugeordnet sind. Nachdem nun ein Arbeitsauftrag oder Arbeitsaggregat 2 dem Fahrerassistenzsystem 3 vorgegeben worden ist, wird ein entsprechendes der Speicherpakete 7a, 7b, 7c, 7d abgerufen, das einen oder mehrere vorausgewählte einstellbare Parameter und/oder zugehörige Werte oder Wertebereiche beinhaltet. Das jeweilige Speicherpaket 7a, 7b, 7c, 7d kann zusätzlich auch schon systemseitig vorgegebene Parameter und/oder Werte oder Wertebereiche beinhalten, die von der Bedienperson nicht veränderbar sind.

Eine bedienerseitige Vorgabe eines landwirtschaftlichen Arbeitsauftrags und/oder Arbeitsaggregats 2 erfolgt hier und vorzugsweise durch eine symbol- und/oder bildbasierte und geführte Auswahl eines Arbeitsauftrags bzw. Arbeitsaggregats 2 aus einer Gruppe von auswählbaren landwirtschaftlichen Arbeitsaufträgen bzw. Arbeitsaggregaten 2. Zusätzlich oder alternativ ist aber auch denkbar, dass eine Vorgabe des Arbeitsaggregats 2 dadurch erfolgt, dass das jeweilige Arbeitsaggregat 2 an die landwirtschaftliche Arbeitsmaschine 1 angeschlossen wird, das heißt mit der landwirtschaftlichen Arbeitsmaschine 1 über eine mechanische Verbindung und/oder eine drahtgebundene oder drahtlose Datenverbindung verbunden wird. In letzterem Fall erkennt das Fahrerassistenzsystem 3 bzw. die Ein-/Ausgabeeinheit 4 automatisch das eingesetzte Arbeitsaggregat 2 und zeigt daraufhin der Bedienperson die vorausgewählten einstellbaren Parameter bzw. Werte oder Wertebereiche an, die zu dem korrespondierenden landwirtschaftlichen Arbeitsauftrag noch verändert werden können.

Eine interaktive Einstellung von Parametern der landwirtschaftlichen Arbeitsmaschine 1 soll nun im Folgenden anhand eines nicht abschließenden und nicht beschränkenden Ausführungsbeispiels beschrieben werden. Wie bei den Fig. 2 bis 6 erkennbar ist, weist die Ein-/Ausgabeeinheit 4 zu diesem Zweck verschiedene Anzeigeabschnitte 10a, 10b, 10c, 10d auf, die jeweils unterschiedliche Informationen und/oder Bedienelemente 8 anzeigen. So wird in dem in den Fig. 2a bis 6a links dargestellten Anzeigeabschnitt 10a eine Darstellung der landwirtschaftlichen Arbeitsmaschine 1 und/oder mindestens eines ein erstes Funktionsmodul bildenden Arbeitsaggregats 2 der landwirtschaftlichen Arbeitsmaschine 1 und/oder des zu befahrenden Bodens 11 optisch angezeigt. Außerdem werden der Bedienperson in diesem Anzeigeabschnitt 10a die für die interaktive Einstellung vorgesehenen Hauptauswahlmöglichkeiten durch je ein virtuelles Bedienelement 8 in Form eines Fragezeichens angezeigt. Außerdem findet sich im Anzeigeabschnitt 10a ein virtuelles Bedienelement 8 in Form zweier um einen Mittelpunkt entgegen des Uhrzeigersinns verlaufender Pfeile zur Symbolisierung eines Reset-Elements. Ferner kann die gewählte Fahrstrategie für den jeweiligen Arbeitsauftrag symbol- und/oder bildbasiert im Anzeigeabschnitt 10a angezeigt werden, hier beispielhaft in Form eines Blatts einer Pflanze für eine energiesparende Fahrstrategie.

Der Anzeigeabschnitt 10a dient auch, wie bei Vergleich der Fig. 2a einerseits mit den Fig. 2b, 3b und 5b andererseits erkennbar ist, zur symbol-, bild- und/oder textbasierten Anzeige von einem durch die Bedienperson konkret ausgewählten Arbeitsauftrag und/oder konkret ausgewählten Arbeitsaggregat 2 und/oder konkret eingestellten oder erfassten Parameter bzw. zugehörigen Wert oder Wertebereich.

In einem zweiten Anzeigeabschnitt 10b, der in den Fig. 2b, 3b, 4b und 5a dargestellt ist, können der Hauptauswahlmöglichkeit untergeordnete Auswahl- bzw. Einstellmöglichkeiten angezeigt werden. Der Anzeigeabschnitt 10b wird vorzugsweise nur dann angezeigt, wenn von der Bedienperson Eingaben erforderlich sind. Über ein virtuelles Bedienelement 8 in Form eines nach rechts weisenden Doppelpfeils kann der Anzeigeabschnitt 10b auch vorübergehend verkleinert oder entfernt werden. Der Anzeigeabschnitt 10b dient zur symbol-, bild- und/oder textbasierten Anzeige von mehreren auswählbaren übergeordneten und/oder untergeordneten Arbeitsaufträgen und/oder auswählbaren Arbeitsaggregaten und/oder einstellbaren Parametern der landwirtschaftlichen Arbeitsmaschine 1 bzw. des Arbeitsaggregats 2.

In den Fig. 2a, 3a, 4a, 5b und 6a sind noch zwei weitere beispielhafte Anzeigeabschnitte dargestellt, beispielsweise ein Anzeigeabschnitt 10c zur Anzeige von Informationen über die Funktionsmodule. Als Funktionsmodul wird neben dem angebauten Arbeitsaggregat 2 beispielsweise eine vordere oder hintere Ballasteinrichtung 12a, 12b, ein vorderes oder hinteres Reifenpaar 13a, 13b, ein Antriebsmotor 14, ein Fahrgetriebe 15 und/oder ein GPS-System 16 angesehen. Informationen zu Funktionsmodulen können der Tankinhalt, Durchschnittsverbrauch, das angebaute Arbeitsaggregat 2, die bearbeitete oder zu bearbeitende Fläche etc. sein. In diesem Anzeigeabschnitt 10c können auch Funktionstasten, Warnhinweise und/oder Informationen, die den eigentlichen Einstellvorgang nicht betreffen, angezeigt werden.

In noch einem Anzeigeabschnitt 10d, der in den Fig. 2a, 3a, 4a, 5b und 6a auf der rechten Seite dargestellt ist, werden virtuelle Bedienelemente 8 angezeigt, mit denen verschiedene Programmier- und/oder Anzeigemodi ausgewählt werden können. Ein virtuelles Bedienelement 8 in Form einer Traktorsilhouette mit Zahnrädern symbolisiert eine Auswahltaste für die interaktive Einstellung von Parametern der landwirtschaftlichen Arbeitsmaschine 1. Hiermit kann die Bedienperson die in Rede stehende Einstellroutine aufrufen. Ein virtuelles Bedienelement 8 in Form eines Fadenkreuzes symbolisiert eine Auswahltaste zur Einstellung von Optimierungsparametern, insbesondere Optimierungsparametern zum jeweils ausgewählten Arbeitsauftrag und/oder Arbeitsaggregat 2.

Fig. 2a zeigt den Beginn der hier beispielhaft dargestellten Einstellroutine für die interaktive Einstellung von Parametern der landwirtschaftlichen Arbeitsmaschine 1 und/oder eines Arbeitsaggregats 2 mittels der Ein-/Ausgabeeinheit 4. Zu Beginn hat dazu die Bedienperson die Einstellroutine dadurch aufgerufen, dass sie in dem Anzeigeabschnitt 10d auf das virtuelle Bedienelement 8 mit dem Traktor- und Zahnräder-Symbol gedrückt hat. Anschließend wird der Bedienperson, was in den Fig. 2a und b dargestellt ist, durch Drücken eines der virtuellen Bedienelemente 8 in Form des Fragezeichens ein Menü im Anzeigeabschnitt 10b angezeigt, über das eine Auswahl von übergeordneten und untergeordneten Arbeitsaufträgen möglich ist.

In Fig. 2b ist dargestellt, dass als übergeordneter landwirtschaftlicher Arbeitsauftrag der Arbeitsauftrag "Ackerbau" vorausgewählt ist (obere Zeile, linkes Symbol). Grundsätzlich kann die Bedienperson auch andere übergeordnete Arbeitsaufträge auswählen, beispielsweise den Arbeitsauftrag "Futterernte" (obere Zeile, mittleres Symbol) oder "Baustelle" (obere Zeile, rechtes Symbol) sowie ggf. auch "Materialhandhabung", "Forstarbeit", "Transport", "Sonstige" und/oder eine Kombination daraus. Zu jedem dieser übergeordneten Arbeitsaufträge gibt das System der Bedienperson mehrere zugeordnete untergeordnete Arbeitsaufträge vor, aus denen die Bedienperson auswählen kann. In Fig. 2b ist dargestellt, dass dem übergeordneten Arbeitsauftrag "Ackerbau" beispielsweise Arbeitsaufträge untergeordnet sein können, wie "Grund-/Bodenbearbeitung", "Säen", "Pflanzen", "Pflanzenschutz", "Düngen", "Gülle und Dung", "Ernten", "Stoppelsturz" und/oder eine Kombination daraus, wobei die Bedienperson in Fig. 2b den untergeordneten Arbeitsauftrag "Grund-/Bodenbearbeitung" auswählt.

Würde sich die Bedienperson stattdessen für den übergeordneten Arbeitsauftrag "Futterernte" entscheiden, könnte sie als einen untergeordneten Arbeitsauftrag beispielsweise einen aus der Gruppe wählen umfassend "Grünlandbewirtschaftung", "Ernten", "Grünlandpflege", "Silage" und/oder eine Kombination daraus. Der übergeordnete Arbeitsauftrag "Sonstige" könnte beispielsweise als untergeordnete Arbeitsaufträge eine Gruppe darstellen umfassend die Arbeitsaufträge "Baustelle", "Materialhandhabung", "Forstarbeit", "Transport", "kommunale Arbeiten" und/oder eine Kombination daraus.

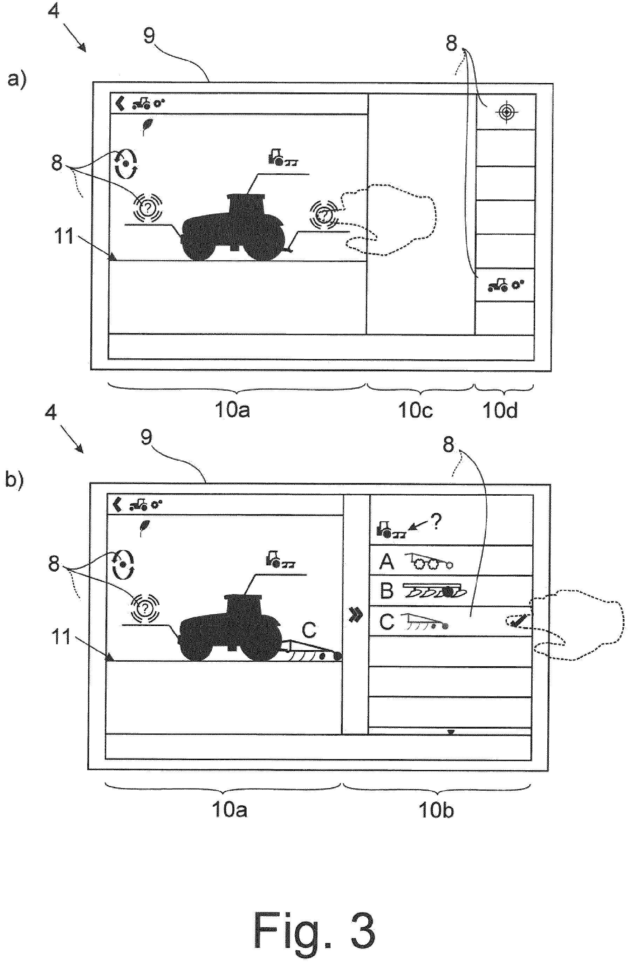

Anschließend kann die Bedienperson, wie in Fig. 3a dargestellt ist, ein dem zuvor gewählten Arbeitsauftrag untergeordnetes bzw. zugeordnetes Arbeitsaggregat 2 auswählen, wozu die Bedienperson ebenfalls ein entsprechendes virtuelles Bedienelement 8 in Form eines Fragezeichens drückt und dann in ein entsprechendes Untermenü geführt wird. In dem Untermenü, das in Fig. 3b auf der rechten Seite angezeigt ist, kann die Bedienperson beispielsweise zwischen den Arbeitsaggregaten "Scheibenegge" (A), "Pflug" (B) und "Grubber" (C) auswählen, wobei sich die Bedienperson hier für den Grubber entscheidet. Die zugeordneten Arbeitsaggregate 2 für die übrigen zuvor genannten Arbeitsaufträge sollen hier im Einzelnen nicht aufgezählt werden. Bei dem jeweiligen Arbeitsaggregat 2 handelt es sich jedenfalls um ein solches, das einem der zuvor genannten entsprechenden Arbeitsaufträge zugeordnet ist.

Die hier beispielhaft beschriebenen untergeordneten landwirtschaftlichen Arbeitsaufträge, die von der Bedienperson auswählbar sind, sind hier in Abhängigkeit einer vorausgegangenen Einstellung des jeweils übergeordneten landwirtschaftlichen Arbeitsauftrags angezeigt worden. Grundsätzlich ist es in einem alternativen Ausführungsbeispiel aber auch möglich, direkt auf die untergeordneten landwirtschaftlichen Arbeitsaufträge oder Arbeitsaggregate 2 zuzugreifen.

Nachdem nun Arbeitsauftrag und Arbeitsaggregat 2 ausgewählt sind, was dann auch im ersten Anzeigeabschnitt 10a angezeigt wird, indem beides optisch bzw. symbol- und/oder bildbasiert dargestellt wird, besteht nun für die Bedienperson die Möglichkeit, abhängig von diesem Arbeitsauftrag und/oder Arbeitsaggregat 2 weitere Parameter einzustellen, hier und vorzugsweise Betriebsparameter der landwirtschaftlichen Arbeitsmaschine 1 und/oder Umgebungsparameter des Geländes.

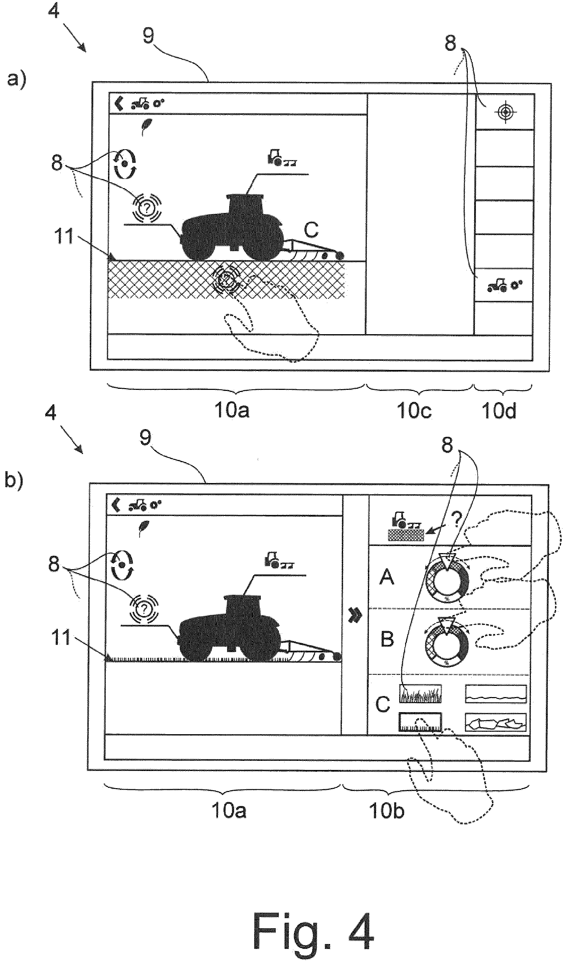

So wird beispielsweise von der Bedienperson in Fig. 4a ein optionales virtuelles Bedienelement 8 in Form eines Fragezeichens gedrückt, das ein arbeitsauftragsspezifisches und/oder arbeitsaggregatspezifisches Untermenü zur Auswahl von Bodenbedingungen öffnet. So lässt sich hier die Bodenart (A), die Bodenfeuchte (B) und/oder der Bodenzustand (C) des zu bearbeitenden Untergrunds festlegen. Bei der Bodenart hat die Bedienperson die Möglichkeit, hier und vorzugsweise zwischen einem leichten Boden, einem mittelschweren Boden und einem schweren Boden zu wählen. Bei der Bodenfeuchtigkeit kann die Bedienperson zwischen einem trockenen, mittelfeuchten und feuchten Boden wählen. Beim Bodenzustand kann zwischen Grasland, Stoppelfeld, tiefbearbeitetem Boden und flachbearbeitetem Boden ausgewählt werden. Die Bedienperson wählt, was in Fig. 4b zu erkennen ist, hier beispielsweise einen mittelschweren Boden mit einer mittleren Feuchtigkeit in Form eines Stoppelfeldes aus. Die erfolgte Auswahl wird anschließend auch im ersten Anzeigeabschnitt 10a angezeigt.

Unabhängig von den zuvor genannten Bodenbedingungen lassen sich als weitere Umgebungsparameter ggfs. auch das Vorhandensein oder Nichtvorhandensein eines Feldes, die Erntegutart, die Erntegutfeuchte, Wetterdaten, GPS-Daten und/oder der Grad der Hügeligkeit des Geländes anzeigen, auswählen und/oder einstellen. Zumindest einige dieser Parameter lassen sich zusätzlich oder alternativ auch durch geeignete Einrichtungen, beispielsweise Sensoreinrichtungen, erfassen.

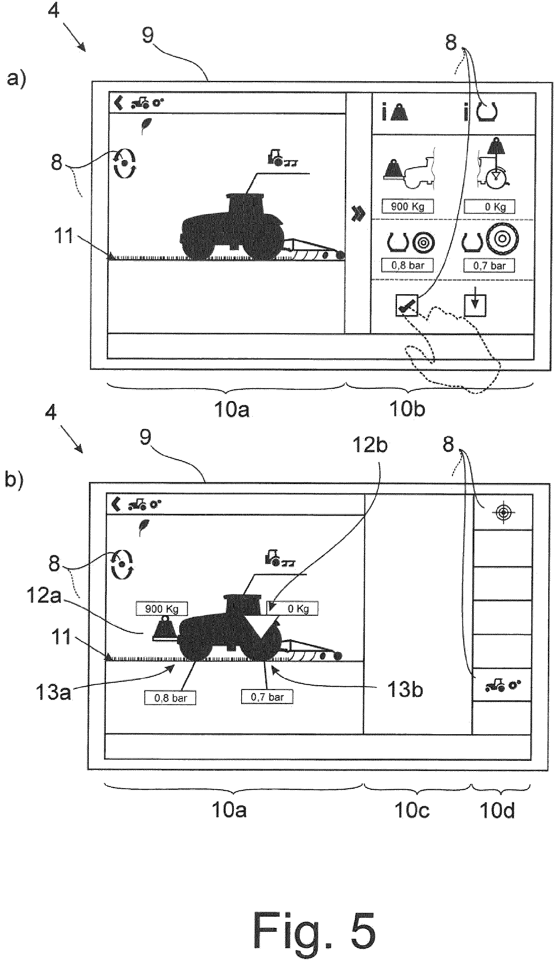

Fig. 5 zeigt ein weiteres Auswahlmenü, das als Untermenü der Bedienperson angezeigt wird, sobald der Arbeitsauftrag und/oder das Arbeitsaggregat 2 feststehen. Hier können Betriebsparameter der landwirtschaftlichen Arbeitsmaschine 1 eingestellt werden, darunter das Gewicht einer vorderen Ballasteinrichtung 12a, das Gewicht einer hinteren Ballasteinrichtung 12b, der Luftdruck eines vorderen Reifenpaars 13a und/oder der Luftdruck eines hinteren Reifenpaars 13b. Im vorliegenden Fall schlägt das System bereits Werte für die entsprechenden Betriebsparameter vor, die hier von der Bedienperson lediglich bestätigt werden müssen. Die Werte lassen sich grundsätzlich aber auch ändern. Dies gilt vorzugsweise grundsätzlich für alle Parameter, die der Bedienperson angezeigt werden und die einstellbar sind. Als Beispiel wird hier für die vordere Ballasteinrichtung 12a ein Gewicht von 900 Kilogramm festgelegt, für die hintere Ballasteinrichtung ein Gewicht von 0 Kilogramm, für das vordere Reifenpaar ein Luftdruck von 0,8 bar und für das hintere Reifenpaar ein Luftdruck von 0,7 bar. Nach erfolgter Bestätigung durch die Bedienperson werden die festgelegten Betriebsparameter auch im ersten Anzeigeabschnitt 10a angezeigt.

Zusätzlich oder alternativ lassen sich als Betriebsparameter auch die Reifenpaarung, der Reifentyp, Antriebsmotor- und/oder Fahrgetriebeparameter, Kabinendaten, beispielsweise die gewünschte Kabinen-Temperatur, Daten über den Ölkreislauf, Daten eines Sequenzmanagements und/oder Flottendaten anzeigen, einstellen und/oder auswählen. Auch diese Daten lassen sich zumindest teilweise von entsprechenden Einrichtungen, beispielsweise Sensoreinrichtungen, erfassen.

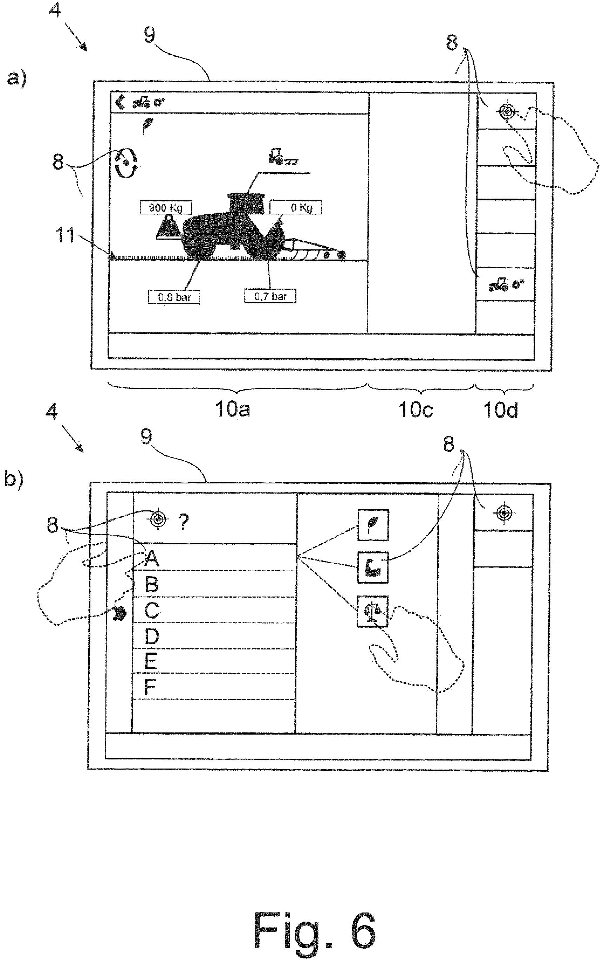

Nachdem nun diese Einstellungen von den diversen Parametern vorgenommen worden sind, lassen sich zusätzlich noch weitere optionale Optimierungen durchführen, die insbesondere arbeitsaggregatspezifisch und/oder arbeitsauftragsspezifisch sind und angezeigt werden, die also speziell für den jeweiligen Arbeitsauftrag bzw. das jeweilige Arbeitsaggregat vorgesehen sind. Dazu kann die Bedienperson im rechten Anzeigeabschnitt 10b das obere der virtuellen Bedienelemente 8 drücken, was in Fig. 6a dargestellt ist, woraufhin beispielsweise ein, wie in Fig. 6b dargestelltes, Untermenü angezeigt wird. Hier lassen sich dann durch Drücken der virtuellen Bedienelemente (A) bis (F) weitere Untermenüs öffnen, im vorliegenden Fall beispielsweise ein Untermenü zur Auswahl einer bestimmten Strategie für den Leistungsbedarf. So kann hier beispielsweise, vorzugsweise ebenfalls symbol- und/oder bildbasiert, zwischen einer besonders energiesparenden Fahrstrategie, einer besonders auf Leistung ausgelegten Fahrstrategie und einer ausgeglichenen Fahrstrategie gewählt werden. Die Bedienperson wählt hier in der Darstellung in Fig. 6b beispielsweise die ausgeglichene Fahrstrategie.

Die zuvor beschriebenen Einstellungen des Fahrerassistenzsystems 3 werden sämtlich in einem sogenannten Vorbereitungsmodus durchgeführt, der über die Ein-/Ausgabeeinheit 4 einstellbar ist. Für die anschließende Ausführung des entsprechenden landwirtschaftlichen Arbeitsauftrags wird das Fahrerassistenzsystem 3 über die Ein-/Ausgabeeinheit 4 dann in einen entsprechenden Arbeitsmodus umgeschaltet, beispielsweise in einen Arbeitsmodus für Feldarbeit oder einen Arbeitsmodus für Straßenfahrt, letzteres in dem Fall, dass der Arbeitsauftrag auf einer Straße oder einem befestigen Gelände durchgeführt wird. In dem jeweiligen Arbeitsmodus lassen sich auch einzelne der vorangehend beschriebenen Parameter von geeigneten Einrichtungen der landwirtschaftlichen Arbeitsmaschine 1 erfassen, die dann in einer Datenbank eines internen und/oder externen Speichermediums 7 speicherbar sind. In einer solchen Datenbank lassen sich auch arbeitsauftragsspezifische und/oder arbeitsaggregatspezifische Profile, insbesondere personenbezogen oder auf eine landwirtschaftliche Arbeitsmaschine 1 bezogen, speichern. Durch das Abrufen der gespeicherten Daten und insbesondere von arbeitsauftrags- und/oder arbeitsaggregatspezifischen Profile aus der Datenbank bzw. vom Speichermedium 7 lässt sich ein nachfolgender Einstellvorgang der vorangehend beschriebenen Art vereinfachen bzw. verkürzen. Zusätzlich kann dieser vereinfacht werden, indem häufig angezeigte bzw. abgefragte Einstellungen vor oder über weiteren Einstellungen angezeigt werden, um den Zugriff darauf weiter zu beschleunigen. Auch können Werte oder Wertebereiche ausgeblendet werden, welche vorher zu schlechten Arbeitsergebnissen geführt haben.

Zusätzlich oder alternativ lässt sich, insbesondere zu weiteren Optimierungszwecken, beispielsweise auch eine Strategie für eine automatische Reifendruckanpassung, eine Strategie für das Kriechverhalten, eine Strategie für die Bearbeitungsqualität, eine Strategie für den Bodenschutz o. dgl. Auswählen und/oder anpassen. Auch ist es denkbar, die Bearbeitungseffizienz, den Fahrkomfort oder die Neigung zum Ruckeln beim Anfahren (Power-Hop-Verhalten) anzupassen. Dies erfolgt insbesondere auch arbeitsauftragsspezifisch und/oder arbeitsaggregatspezifisch, vorzugsweise im jeweiligen Arbeitsmodus. Auch eine dialogbasierte (manuelle) Anpassung ist denkbar.

### Bezugszeichenliste

- 1: Landwirtschaftliche Arbeitsmaschine
- 2: Arbeitsaggregate
- 3: Fahrerassistenzsystem
- 4: Ein-/Ausgabeeinheit
- 5: Traktor
- 6: Mikroprozessor
- 7: Speichermedium
- 7a - 7d: Speicherpakete
- 8: Virtuelle Bedienelemente
- 9: Touchscreen
- 10a - 10d: Anzeigeabschnitte
- 11: Zu befahrender Boden
- 12a: Vordere Ballasteinrichtung
- 12b: Hintere Ballasteinrichtung
- 13a: Vorderes Reifenpaar
- 13b: Hinteres Reifenpaar
- 14: Antriebsmotor
- 15: Fahrgetriebe
- 16: GPS-System

## Patentansprüche

1. Landwirtschaftliche Arbeitsmaschine, insbesondere Traktor (5), mit einem Fahrerassistenzsystem (3), das eine Ein-/Ausgabeeinheit (4) zur Vornahme von einen landwirtschaftlichen Arbeitsauftrag betreffenden Einstellungen durch eine Bedienperson und zur Anzeige von die Einstellungen ermöglichenden virtuellen Bedienelementen (8) und zur Anzeige von den vorzunehmenden und/oder vorgenommenen Einstellungen entsprechenden Informationen aufweist,
**dadurch gekennzeichnet, dass** das Fahrerassistenzsystem (3) derart eingerichtet ist, dass mit der Ein-/Ausgabeeinheit (4) eine interaktive Einstellung mindestens eines Parameters der landwirtschaftlichen Arbeitsmaschine (1) und/oder mindestens eines Arbeitsaggregats (2) zur Durchführung oder Unterstützung des landwirtschaftlichen Arbeitsauftrags symbolbasiert und/oder bildbasiert sowie geführt vorgenommen werden kann, wobei der mindestens eine einstellbare Parameter und/oder dessen Wert oder Wertebereich jeweils auf einen von der Bedienperson ausgewählten landwirtschaftlichen Arbeitsauftrag hin und/oder auf ein von der Bedienperson ausgewähltes und/oder angebautes Arbeitsaggregat (2) hin vom Fahrerassistenzsystem (3) vorausgewählt wird.

2. Landwirtschaftliche Arbeitsmaschine nach Anspruch 1, **dadurch gekennzeichnet, dass** die Ein-/Ausgabeeinheit (4) für die interaktive Einstellung einen Touchscreen (9) und/oder außen an der landwirtschaftlichen Arbeitsmaschine (1) vorgesehene Ein-/Ausgabemittel (4) aufweist.

3. Landwirtschaftliche Arbeitsmaschine nach Anspruch 1 oder 2, **dadurch gekennzeichnet, dass** die Ein-/Ausgabeeinheit (4) einen oder mehrere Anzeigeabschnitte (10a - 10d) aufweist, die unterschiedliche Informationen und/oder Bedienelemente anzeigen.

4. Landwirtschaftliche Arbeitsmaschine nach einem der vorhergehenden Ansprüche, **dadurch gekennzeichnet, dass**
- in einem Anzeigeabschnitt (10a) der Ein-/Ausgabeeinheit (4) eine Darstellung der landwirtschaftlichen Arbeitsmaschine (1) und/oder mindestens eines ein erstes Funktionsmodul bildenden Arbeitsaggregats (2) der landwirtschaftlichen Arbeitsmaschine (1) und/oder des zu befahrenden Bodens (11) optisch angezeigt wird, und/oder,
- in einem Anzeigeabschnitt (10a) der Ein-/Ausgabeeinheit (4) eine Darstellung mindestens eines weiteren Funktionsmoduls der landwirtschaftlichen Arbeitsmaschine (1) optisch angezeigt wird, und/oder,
- in einem Anzeigeabschnitt (10b) der Ein-/Ausgabeeinheit (4) mehrere auswählbare übergeordnete und/oder untergeordnete Arbeitsaufträge und/oder mehrere auswählbare Arbeitsaggregate (2) und/oder mehrere einstellbare Parameter der landwirtschaftlichen Arbeitsmaschine (1) und/oder des mindestens einen Arbeitsaggregats (2) symbolbasiert und/oder bildbasiert und/oder textbasiert angezeigt werden, und/oder,
- in einem Anzeigeabschnitt (10a) der Ein-/Ausgabeeinheit (4) der ausgewählte landwirtschaftliche Arbeitsauftrag und/oder das eingesetzte Arbeitsaggregat (2) und/oder der mindestens ein eingestellter oder erfasster Parameter und/oder dessen Wert oder Wertebereich symbolbasiert und/oder bildbasiert und/oder textbasiert angezeigt wird, und/oder,
- in einem Anzeigeabschnitt (10c) der Ein-/Ausgabeeinheit (4) mindestens eine Funktionstaste und/oder ein Warnhinweis symbolbasiert und/oder bildbasiert und/oder textbasiert angezeigt wird, und/oder,
- in einem Anzeigeabschnitt (10a) der Ein-/Ausgabeeinheit (4) ein Feld oder Symbol und/oder Bild für eine Reset-Eingabe angezeigt wird.

5. Landwirtschaftliche Arbeitsmaschine nach Anspruch 4, **dadurch gekennzeichnet, dass** als weiteres Funktionsmodul eine vordere Ballasteinrichtung (12a), eine hintere Ballasteinrichtung (12b), ein vorderes Reifenpaar (13a), ein hinteres Reifenpaar (13b), ein Antriebsmotor (14), ein Fahrgetriebe (15) und/oder ein GPS-System (16) angezeigt wird.

6. Landwirtschaftliche Arbeitsmaschine nach einem der vorhergehenden Ansprüche, **dadurch gekennzeichnet, dass** als auswählbarer und/oder ausgewählter landwirtschaftlicher Arbeitsauftrag ein übergeordneter landwirtschaftlicher Arbeitsauftrag, der einen Arbeitstyp definiert, aus der Gruppe umfassend "Ackerbau", "Futterernte", "Baustelle", "Materialhandhabung", "Forstarbeit", "Transport", "Sonstige" und/oder eine Kombination daraus angezeigt wird.

7. Landwirtschaftliche Arbeitsmaschine nach einem der vorhergehenden Ansprüche, **dadurch gekennzeichnet, dass** als auswählbarer und/oder ausgewählter landwirtschaftlicher Arbeitsauftrag ein untergeordneter landwirtschaftlicher Arbeitsauftrag, der eine dem übergeordneten landwirtschaftlichen Arbeitsauftrag "Ackerbau" untergeordnete Bearbeitungsart definiert, aus der Gruppe umfassend "Grund-/Bodenbearbeitung", "Säen", "Pflanzen", "Pflanzenschutz", "Düngen", "Gülle und Dung", "Ernten", "Stoppelsturz" und/oder eine Kombination daraus angezeigt wird.

8. Landwirtschaftliche Arbeitsmaschine nach einem der vorhergehenden Ansprüche, **dadurch gekennzeichnet, dass** als auswählbarer und/oder ausgewählter landwirtschaftlicher Arbeitsauftrag ein untergeordneter landwirtschaftlicher Arbeitsauftrag, der eine dem übergeordneten landwirtschaftlichen Arbeitsauftrag "Futterernte" untergeordnete Bearbeitungsart definiert, aus der Gruppe umfassend "Grünlandbewirtschaftung", "Ernten", "Grünlandpflege", "Silage" und/oder eine Kombination daraus angezeigt wird.

9. Landwirtschaftliche Arbeitsmaschine nach einem der vorhergehenden Ansprüche, **dadurch gekennzeichnet, dass** als auswählbarer und/oder ausgewählter landwirtschaftlicher Arbeitsauftrag ein untergeordneter landwirtschaftlicher Arbeitsauftrag, der eine dem übergeordneten landwirtschaftlichen Arbeitsauftrag "Sonstige" untergeordnete Bearbeitungsart definiert, aus der Gruppe umfassend "Baustelle", "Materialhandhabung", "Forstarbeit", "Transport", "kommunale Arbeiten" und/oder eine Kombination daraus angezeigt wird.

10. Landwirtschaftliche Arbeitsmaschine nach einem der Ansprüche 7 bis 9, **dadurch gekennzeichnet, dass** der oder die auswählbaren untergeordneten landwirtschaftlichen Arbeitsaufträge als erste interaktive Einstellung oder in Abhängigkeit einer vorausgegangenen Einstellung des übergeordneten landwirtschaftlichen Arbeitsauftrags angezeigt wird bzw. werden.

11. Landwirtschaftliche Arbeitsmaschine nach einem der vorhergehenden Ansprüche, **dadurch gekennzeichnet, dass** als eingesetztes und/oder ausgewähltes Arbeitsaggregat (2) ein Arbeitsaggregat (2) angezeigt wird, das einem landwirtschaftlichen Arbeitsauftrag zugeordnet ist aus der Gruppe umfassend mindestens einen landwirtschaftlichen Arbeitsauftrag nach dem kennzeichnenden Teil eines der Ansprüche 6 bis 9.

12. Landwirtschaftliche Arbeitsmaschine nach einem der vorhergehenden Ansprüche, **dadurch gekennzeichnet, dass** das eingesetzte Arbeitsaggregat (2) automatisch beim Herstellen einer mechanischen Verbindung und/oder einer drahtgebundenen oder drahtlosen Datenverbindung zwischen dem jeweiligen Arbeitsaggregat (2) und der landwirtschaftlichen Arbeitsmaschine (1) erkannt wird.

13. Landwirtschaftliche Arbeitsmaschine nach einem der vorhergehenden Ansprüche, **dadurch gekennzeichnet, dass** als Parameter mindestens ein Betriebsparameter der landwirtschaftlichen Arbeitsmaschine (1) und/oder Umgebungsparameter des Geländes erfassbar, einstellbar, auswählbar und/oder anzeigbar ist, der zum arbeitsaggregatspezifischen und/oder arbeitsauftragsspezifischen Einstellen des Fahrerassistenzsystems (3) ebenfalls zugrunde legbar ist und/oder als Information für die Bedienperson dient,
- wobei der jeweilige Betriebsparameter aus der Gruppe gewählt ist umfassend das Gewicht der vorderen Ballasteinrichtung (12a), das Gewicht der hinteren Ballasteinrichtung (12b), die Reifenpaarung (13a, 13b), den Reifentyp und/oder Luftdruck des vorderen Reifenpaars (13a), den Reifentyp und/oder Luftdruck des hinteren Reifenpaars (13b), eine Strategie für eine automatische Reifendruckanpassung, eine Strategie für das Kriechverhalten, eine Strategie für den Leistungsbedarf, eine Strategie für die Bearbeitungsqualität, eine Strategie für den Bodenschutz, eine Strategie für den Fahrkomfort, eine Strategie für das Power-Hop-Verhalten, Antriebsmotor- und/oder Fahrgetriebeparameter, Kabinendaten, Daten über den Ölkreislauf, Daten eines Sequenzmanagements und/oder Flottendaten, und/oder,
- wobei der jeweilige Umgebungsparameter aus der Gruppe gewählt ist umfassend das Vorhandensein oder Nichtvorhandensein eines Feldes, die Bodenart, den Bodenzustand, die Bodenfeuchte, die Erntegutart, die Erntegutfeuchte, Wetterdaten, GPS-Daten und/oder den Grad der Hügeligkeit des Geländes.

14. Landwirtschaftliche Arbeitsmaschine nach einem der vorhergehenden Ansprüche, **dadurch gekennzeichnet, dass** das Fahrerassistenzsystem (3) zwischen einem Vorbereitungsmodus und einem Arbeitsmodus für Feldarbeit und/oder einem Arbeitsmodus für Straßenfahrt umschaltbar ist, wobei das interaktive Einstellen im Vorbereitungsmodus erfolgt, und/oder, das Erfassen und/oder Anzeigen des mindestens einen Betriebsparameters und/oder Umgebungsparameters im jeweiligen Arbeitsmodus erfolgt.

15. Landwirtschaftliche Arbeitsmaschine nach einem der vorhergehenden Ansprüche, **dadurch gekennzeichnet, dass** einzelne oder mehrere der erfassten, eingestellten und/oder ausgewählten Parameter und/oder arbeitsauftragsspezifische und/oder arbeitsaggregatspezifische Profile umfassend einzelne oder mehrere der erfassten, eingestellten und/oder ausgewählten Parameter
- in einer Datenbank eines internen und/oder externen Speichermediums (7) speicherbar sind, und/oder,
- bei einem nachfolgenden Einstellvorgang aus einer Datenbank eines internen und/oder externen Speichermediums (7) abrufbar sind, und/oder,
- bei einem nachfolgenden Einstellvorgang ausblendbar sind.

16. Landwirtschaftliche Arbeitsmaschine nach einem der vorhergehenden Ansprüche, **dadurch gekennzeichnet, dass** in Abhängigkeit von dem jeweiligen Modus, Arbeitsauftrag und/oder Arbeitsaggregat (2) ausschließlich spezifisch zugeordnete Anzeigeabschnitte (10a, 10b, 10c, 10d) und/oder Informationen angezeigt werden.

## Claims

1. An agricultural working machine, in particular a tractor (5), having a driver assistance system (3) which has an input/output unit (4) for an operator to make adjustments relating to an agricultural operational assignment and for displaying virtual operating elements (8) which allow the adjustments to be made and for displaying information corresponding to the adjustments to be made and/or which have been made,
**characterized in that**
the driver assistance system (3) is configured such that with the input/output unit (4), a symbol-based and/or image-based as well as guided interactive adjustment of at least one parameter of the agricultural working machine (1) and/or at of least one working unit (2) can be made in order to operate or support the agricultural operational assignment, wherein the at least one adjustable parameter and/or its value or range of values is respectively pre-selected by the driver assistance system (3) on the basis of an agricultural operational assignment selected by the operator and/or on the basis of a working unit (2) selected and/or added by the operator.

2. The agricultural working machine according to claim 1, **characterized in that** for the interactive adjustment, the input/output unit (4) has a touch screen (9) and/or input/output means (4) provided externally on the agricultural working machine (1).

3. The agricultural working machine according to claim 1 or claim 2, **characterized in that** the input/output unit (4) has one or more display sections (10a - 10d) which display different information and/or operating elements.

4. The agricultural working machine according to one of the preceding claims, **characterized in that**
- a representation of the agricultural working machine (1) and/or of at least one working unit (2) of the agricultural working machine (1) forming a first functional module and/or of the ground (11) to be navigated is optically displayed in a display section (10a) of the input/output unit (4), and/or
- a representation of at least one further functional module of the agricultural working machine (1) is optically displayed in a display section (10a) of the input/output unit (4), and/or
- a plurality of selectable superordinate and/or subordinate operational assignments and/or a plurality of selectable working units (2) and/or a plurality of adjustable parameters of the agricultural working machine (1) and/or of the at least one working unit (2) are displayed on the basis of symbols and/or images and/or text in a display section (10b) of the input/output unit (4), and/or
- the selected agricultural operational assignment and/or the working unit (2) used and/or the at least one adjusted or detected parameter and/or its value or range of values are displayed on the basis of symbols and/or images and/or text in a display section (10a) of the input/output unit (4), and/or
- at least one function key and/or a warning message is displayed on the basis of symbols and/or images and/or text in a display section (10c) of the input/output unit (4), and/or
- a field or symbol and/or image for a reset input is displayed in a display section (10a) of the input/output unit (4).

5. The agricultural working machine according to claim 4, **characterized in that** a front ballast arrangement (12a), a rear ballast arrangement (12b), a front tyre pair (13a), a rear tyre pair (13b), a propulsion engine (14), a transmission (15) and/or a GPS system (16) are displayed as the further functional module.

6. The agricultural working machine according to one of the preceding claims, **characterized in that** a superordinate agricultural operational assignment which defines a type of work from the group comprising "cultivation", "fodder harvesting", "construction site", "material handling", "forestry work", "transport", "other" and/or a combination thereof is displayed as the selectable and/or selected agricultural operational assignment.

7. The agricultural working machine according to one of the preceding claims, **characterized in that** a subordinate agricultural operational assignment which defines a type of operation which is subordinate to the superordinate agricultural operational assignment "cultivation" from the group comprising "ground/soil working", "sowing", "planting", "plant protection", "fertilizing", "slurry spreading", "harvesting", "stubble breaking" and/or a combination thereof is displayed as the selectable and/or selected agricultural operational assignment.

8. The agricultural working machine according to one of the preceding claims, **characterized in that** a subordinate agricultural operational assignment which defines a type of operation which is subordinate to the superordinate agricultural operational assignment "fodder harvesting" from the group comprising "grassland management", "harvesting", "grassland care", "silage" and/or a combination thereof is displayed as the selectable and/or selected agricultural operational assignment.

9. The agricultural working machine according to one of the preceding claims, **characterized in that** a subordinate agricultural operational assignment which defines a type of operation which is subordinate to the superordinate agricultural operational assignment "other" from the group comprising "construction site", "material handling", "forestry work", "transport", "municipal work" and/or a combination thereof is displayed as the selectable and/or selected agricultural operational assignment.

10. The agricultural working machine according to one of claims 7 to 9, **characterized in that** the subordinate agricultural operational assignment or assignments which can be selected is or are displayed as a first interactive setting or as a function of a previous setting of the superordinate agricultural operational assignment.

11. The agricultural working machine according to one of the preceding claims, **characterized in that** a working unit (2) is displayed as the working unit (2) which is used and/or selected which is associated with an agricultural operational assignment from the group comprising at least one agricultural operational assignment according to the characterizing portions of one of claims 6 to 9.

12. The agricultural working machine according to one of the preceding claims, **characterized in that** the working unit (2) used is automatically recognized upon establishment of a mechanical connection and/or a cabled or wireless data connection between the respective working unit (2) and the agricultural working machine (1).

13. The agricultural working machine according to one of the preceding claims, **characterized in that** at least one operational parameter of the agricultural working machine (1) and/or environmental parameter of the terrain can be detected, adjusted, selected and/or displayed as the parameter, which can also be used as a basis for working unit-specific and/or operational assignment-specific adjustment of the driver assistance system (3) also and/or serves as information for the operator,
- wherein the respective operational parameter is selected from the group comprising the weight of the front ballast arrangement (12a), the weight of the rear ballast arrangement (12b), the tyre pairs (13a, 13b), the tyre type and/or air pressure of the front tyre pair (13a), the tyre type and/or air pressure of the rear tyre pair (13b), a strategy for an automatic tyre pressure adaptation, a crawl behaviour strategy, a power requirement strategy, a processing quality strategy, a ground protection strategy, a drive comfort strategy, a power hop behaviour strategy, propulsion engine and/or transmission parameters, cab data, data concerning the oil circulation, data from sequence management and/or fleet data, and/or
- wherein the respective environmental parameter is selected from the group comprising the presence or absence of a field, the type of ground, the ground state, the ground moisture, the type of crop, the crop moisture, weather data, GPS data and/or the contours of the terrain.

14. The agricultural working machine according to one of the preceding claims, **characterized in that** the driver assistance system (3) can be switched between a preparation mode and an operational mode for field work and/or an operational mode for road travel, wherein the interactive adjustment is carried out in the preparation mode, and/or the detection and/or display of the at least one operational parameter and/or environmental parameter occurs in the respective operational mode.

15. The agricultural working machine according to one of the preceding claims, **characterized in that** individual or a plurality of the detected, set and/or selected parameters and/or operational assignment-specific and/or working unit-specific profiles comprising individual or a plurality of the detected, set and/or selected parameters
- can be stored in a database of an internal and/or external storage medium (7), and/or
- can be retrieved from a database of an internal and/or external storage medium (7) during a subsequent adjustment procedure, and/or
- can be hidden during a subsequent adjustment procedure.

16. The agricultural working machine according to one of the preceding claims, **characterized in that** exclusively specifically allocated display sections (10a, 10b, 10c, 10d) and/or information are displayed as a function of the respective mode, operational assignment and/or working unit (2).

## Revendications

1. Machine de travail agricole, en particulier tracteur (5), comprenant un système d'assistance à la conduite (3) qui comporte une unité d'entrée/sortie (4) pour la réalisation de réglages concernant une tâche agricole par une personne utilisatrice et pour l'affichage d'éléments d'utilisation virtuels (8) permettant les réglages et pour l'affichage d'informations correspondant aux réglages à réaliser et/ou réalisés, **caractérisée en ce que** le système d'assistance à la conduite (3) est agencé de façon que l'unité d'entrée/sortie (4) permet de réaliser un réglage interactif au moins d'un paramètre de la machine de travail agricole (1) et/ou au moins d'un organe de travail (2) pour accomplir ou assister la tâche agricole à l'aide de symboles et/ou à l'aide d'images ainsi que de manière guidée, le au moins un paramètre réglable et/ou sa valeur ou plage de valeurs étant respectivement présélectionnés par le système d'assistance à la conduite (3) en fonction d'une tâche agricole sélectionnée par la personne utilisatrice et/ou en fonction d'un organe de travail (2) sélectionné et/ou attelé par la personne utilisatrice.

2. Machine de travail agricole selon la revendication 1, **caractérisée en ce que** l'unité d'entrée/sortie (4) comporte, pour le réglage interactif, un écran tactile (9) et/ou des moyens d'entrée/sortie (4) prévus extérieurement sur la machine de travail agricole (1).

3. Machine de travail agricole selon la revendication 1 ou 2, **caractérisée en ce que** l'unité d'entrée/sortie (4) comporte une ou plusieurs portions d'affichage (10a-10d) qui affichent divers informations et/ou éléments d'utilisation.

4. Machine de travail agricole selon une des revendications précédentes, **caractérisée en ce que**
- dans une portion d'affichage (10a) de l'unité d'entrée/sortie (4) est affichée optiquement une représentation de la machine de travail agricole (1) et/ou au moins d'un organe de travail (2) de la machine de travail agricole (1) formant un premier module fonctionnel et/ou du sol à parcourir (11), et/ou
- dans une portion d'affichage (10a) de l'unité d'entrée/sortie (4) est affichée optiquement une représentation au moins d'un module fonctionnel supplémentaire de la machine de travail agricole (1), et/ou
- dans une portion d'affichage (10b) de l'unité d'entrée/sortie (4) sont affichés, à l'aide de symboles et/ou l'aide d'images et/ou à l'aide de texte, plusieurs tâches sélectionnables primaires et/ou secondaires et/ou plusieurs organes de travail sélectionnables (2) et/ou plusieurs paramètres réglables de la machine de travail agricole (1) et/ou du au moins un organe de travail (2), et/ou
- dans une portion d'affichage (10a) de l'unité d'entrée/sortie (4) est affiché, à l'aide de symboles et/ou l'aide d'images et/ou à l'aide de texte, la tâche agricole sélectionnée et/ou l'organe de travail utilisé (2) et/ou le au moins un paramètre réglé et/ou détecté et/ou sa valeur ou plage de valeurs, et/ou
- dans une portion d'affichage (10c) de l'unité d'entrée/sortie (4) est affiché, à l'aide de symboles et/ou l'aide d'images et/ou à l'aide de texte, au moins une touche de fonction et/ou un message d'alerte, et/ou
- dans une portion d'affichage (10a) de l'unité d'entrée/sortie (4) est affiché une case ou un symbole et/ou une image pour une entrée de réinitialisation.

5. Machine de travail agricole selon la revendication 4, **caractérisée en ce que** comme module fonctionnel supplémentaire est affiché un équipement de lestage avant (12a), un équipement de lestage arrière (12b), une paire de pneumatiques avant (13a), une paire de pneumatiques arrière (13b), un moteur d'entraînement (14), une boîte de vitesses (15) et/ou un système GPS (16).

6. Machine de travail agricole selon une des revendications précédentes, **caractérisée en ce que** comme tâche agricole sélectionnable et/ou sélectionnée est affichée une tâche agricole primaire qui définit un type de travail parmi le groupe incluant « travail aratoire », « récolte fourragère », « chantier », « manutention », « travaux forestiers », « transport », « divers » et/ou une combinaison de ceux-ci.

7. Machine de travail agricole selon une des revendications précédentes, **caractérisée en ce que** comme tâche agricole sélectionnable et/ou sélectionnée est affichée une tâche agricole secondaire qui définit un type de traitement secondaire par rapport à la tâche agricole primaire « travail aratoire », parmi le groupe incluant « transformation de la terre/du sol », « ensemencement », « plantation », « protection des végétaux », « fertilisation », « épandage de lisier et d'engrais », « récolte », « déchaumage » et/ou une combinaison de ceux-ci.

8. Machine de travail agricole selon une des revendications précédentes, **caractérisée en ce que** comme tâche agricole sélectionnable et/ou sélectionnée est affichée une tâche agricole secondaire qui définit un type de traitement secondaire par rapport à la tâche agricole primaire « récolte fourragère », parmi le groupe incluant « exploitation des herbages », « récolte », « entretien des herbages », « ensilage » et/ou une combinaison de ceux-ci.

9. Machine de travail agricole selon une des revendications précédentes, **caractérisée en ce que** comme tâche agricole sélectionnable et/ou sélectionnée est affichée une tâche agricole secondaire qui définit un type de traitement secondaire par rapport à la tâche agricole primaire « divers », parmi le groupe incluant « chantier », « manutention », « travaux forestiers », « transport », « travaux communaux » et/ou combinaison de ceux-ci.

10. Machine de travail agricole selon une des revendications 7 à 9, **caractérisée en ce que** la ou les tâches agricoles secondaires sélectionnables est, respectivement sont affichées comme premier réglage interactif ou en fonction d'un réglage antérieur de la tâche agricole primaire.

11. Machine de travail agricole selon une des revendications précédentes, **caractérisée en ce que** comme organe de travail utilisé et/ou sélectionné (2) est affiché un organe de travail (2) qui est associé à une tâche agricole parmi le groupe incluant au moins une tâche agricole selon la partie caractérisante d'une des revendications 6 à 9.

12. Machine de travail agricole selon une des revendications précédentes, **caractérisée en ce que** l'organe de travail utilisé (2) est reconnu automatiquement lors de l'établissement d'une liaison mécanique et/ou d'une liaison de données filaire ou sans fil entre l'organe de travail respectif (2) et la machine de travail agricole (1).

13. Machine de travail agricole selon une des revendications précédentes, **caractérisée en ce que** comme paramètre peut être détecté, réglé, sélectionné et/ou affiché au moins un paramètre d'exploitation de la machine de travail agricole (1) et/ou paramètre environnemental du terrain, lequel peut aussi servir de base au réglage spécifique du système d'assistance à la conduite (3) en fonction de l'organe de travail et/ou en fonction de la tâche et/ou servir d'information pour la personne utilisatrice,
- le paramètre d'exploitation respectif étant sélectionné parmi le groupe incluant le poids de l'équipement de lestage avant (12a), le poids de l'équipement de lestage arrière (12b), la paire de pneumatiques (13a, 13b), le type de pneumatiques et/ou la pression d'air de la paire de pneumatiques avant (13a), le type de pneumatiques et/ou la pression d'air de la paire de pneumatiques arrière (13b), une stratégie pour une adaptation automatique de pression de pneumatiques, une stratégie pour le comportement en gamme lente, une stratégie pour le besoin en puissance, une stratégie pour la qualité de travail, une stratégie pour la protection du sol, une stratégie pour le confort de conduite, une stratégie pour le comportement en Power Hop, des paramètres de moteur d'entraînement et/ou de boîte de vitesses, des données de cabine, des données sur le circuit d'huile, des données d'une gestion séquencée et/ou des données de flotte et/ou
- le paramètre environnemental respectif étant sélectionné parmi le groupe incluant la présence ou la non-présence d'un champ, la nature du sol, l'état du sol, l'humidité du sol, la nature de la récolte, l'humidité de la récolte, des données météorologiques, des données GPS et/ou le degré de vallonnement du terrain.

14. Machine de travail agricole selon une des revendications précédentes, **caractérisée en ce que** le système d'assistance à la conduite (3) est commutable entre un mode de préparation et un mode de travail pour le travail en champ et/ou un mode de travail pour le trajet sur route, le réglage interactif s'effectuant en mode de préparation, et/ou la détection et/ou l'affichage du au moins un paramètre d'exploitation et/ou paramètre environnemental dans le mode de travail respectif.

15. Machine de travail agricole selon une des revendications précédentes, **caractérisée en ce qu'**un ou plusieurs des paramètres et/ou profils spécifiques à la tâche et/ou spécifiques à l'organe de travail détectés, réglés et/ou sélectionnés, incluant un ou plusieurs des paramètres détectés, réglés et/ou sélectionnés,
- peuvent être stockés dans une banque de données d'un moyen de stockage interne et/ou externe (7), et/ou
- en cas de processus de réglage ultérieur, peuvent être disponibles auprès d'une banque de données d'un moyen de stockage interne et/ou externe (7), et/ou
- en cas de processus de réglage ultérieur, peuvent être supprimés.

16. Machine de travail agricole selon une des revendications précédentes, **caractérisée en ce qu'**en fonction du mode, de la tâche et/ou de l'organe de travail (2) respectifs sont affichées exclusivement des portions d'affichage (10a, 10b, 10c, 10d) et/ou des informations spécifiquement associées.
